# EUROPEAN PATENT APPLICATION

(11) **EP 3 629 132 A1**
(43) Date of publication of application: **01.04.2020**
(21) Application number: 19186432.1
(22) Date of filing: 16.07.2019
(51) Int. Cl.: G06F 3/01

(54) **SYSTEMS AND METHODS FOR INSPECTING AND INTERACTING WITH A REAL-WORLD SPACE STRUCTURE IN REAL-TIME USING VIRTUAL REALITY TECHNOLOGY**

(30) Priority: 26.09.2018 US 201816142629
(71) Applicant: Eagle Technology, LLC, Melbourne, FL 32919 (US)
(72) Inventor: Campbell, Thomas B., Satellite Beach, FL 32937 (US)
(74) Representative: Schmidt, Steffen J.

(57) **Abstract**

Systems (100) and methods (500) for inspecting and/or interacting with a Real-World Space Structure ("RWSS") deployed in space using VR technology. The methods comprise: obtaining, by a computing device located on Earth, a first digital 3D model of RWSS having moving parts with VR positional tracking markers coupled thereto; receiving a video generated by at least one camera of RWSS deployed in space, where at least some of the VR positional tracking markers were in the camera's view at the time of the video's creation; using the video's content to convert the first digital 3D model into a second digital 3D model representative of current positions and orientations of RWSS's moving parts; and providing an operator with a real-time VR experience with RWSS by displaying the second digital 3D model in a VR space environment.

## Description

### FIELD

This document relates generally to Virtual Reality ("VR") based systems. More particularly, this document relates to implementing systems and methods for inspecting and interacting with a real-world space structure in real-time using VR technology.

### BACKGROUND

Due to the nature and environment of deployment of space structures, the ability to validate, assess, and modify these structures post deployment is limited. This impacts the ability to gather data concerning the final as-deployed condition of the structure, as well as limits the complexity and intricacy of any modification to the structure that could be performed.

Currently, the successful deployment of space structures is validated and monitored via time verse distance graphs typically limited to critical interfaces. Remote repair or modification of the structures in space is limited by the visual and physical feedback to the operator. Typically, this is achieved using a series of individual cameras that provide isolated views back to the operator.

### SUMMARY

The present disclosure concerns implementing systems and methods for inspecting and interacting with a real-world space structure deployed in space using VR technology. The methods comprise: obtaining, by a computing device located on Earth, a first digital 3D model of the real-world space structure having moving parts with a plurality of VR positional tracking markers coupled thereto; receiving, by the computing device, a video generated by at least one camera of the real-world space structure deployed in space (where at least some of the plurality of VR positional tracking markers were in the camera's view at the time of the video's creation); using the video's content, by the computing device, to convert the first digital 3D model into a second digital 3D model representative of current positions and orientations of the real-world space structure's moving parts; and providing an operator with a real-time VR experience with the real-world space structure by displaying the second digital 3D model in a VR space environment.

In some scenarios, the methods further comprise: causing movement of at least a portion of the real-world space structure deployed in space by the operator via user-software interactions for interacting with the second digital 3D model while the operator is having the real-time VR experience on Earth; and providing visual feedback of the real-world space structure's movement to the operator via the VR technology. The movement may result in an assembly of at least a portion of the real-world space structure while being deployed in space. The assembly can be achieved through a remote control of at least one robotic arm of the real-world space structure using the VR technology.

In those or other scenarios, the first 3D model is converted into the second 3D model by: comparing known VR positional tracking marker locations on the real-world space structure with VR positional tracking marker locations shown in the video; and determining at least one of a first current position and a first current orientation of each said moving part of the real-world space structure based on results of the comparing. At least one of the first current position and the first current orientation may be transformed to a more accurate value based on sensor data generated by at least one motion or position detection sensor (e.g., a accelerometer) coupled to the real-world space structure deployed in space.

In those or yet other scenarios, the VR positional tracking system markers comprise at least one of a periodically flashing light source and a retroreflective marker. The periodically flashing light source comprises at least one of a radiation protective enclosure, a mechanical vibration isolation mechanism, and a thermal control device.

### DESCRIPTION OF THE DRAWINGS

The present solution will be described with reference to the following drawing figures, in which like numerals represent like items throughout the figures.
FIG. 1 is an illustration of an illustrative system.
FIG. 2 is a block diagram of an illustrative computing device.
FIG. 3 shows an illustrative architecture of a VR system.
FIG. 4 is an illustration of an illustrative VR environment in which a visual experience with a real-world space structure is simulated.
FIG. 5 is an illustrative method for inspecting and interacting with a real-world space structure in real-time using VR technology.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

With space craft and equipment, there has been traditionally a great detail of attention paid to ensuring reliability thereof through interaction with the design and fabrication on the ground. Once the space craft and equipment was launched into space, a controller of a ground based system is actuated to cause activation and/or deployment of deployable components of the space craft and/or equipment (e.g., an antenna or solar panel). There are only a few ways to know if the space craft and equipment is healthy in a space environment. One way is to establish a communications connection to the space craft and/or equipment, and receive sensor data from sensors thereof (e.g., a switch provided to detect the opening of a hinge or the deployment of a solar panel, or a potentiometer provided to detect an angle of an antenna). One could ascertain that the space craft and/or equipment is potentially healthy based on the sensor data.

Today, there are some satellites that are adding relatively crude video which is downlinked to the ground based system. This video assists in the analysis as to whether the space craft and/or equipment is healthy at any given time.

With the advent of stereo video and/or VR technology, a person can have a real-time VR experience with the space craft and/or equipment. In this regard, the person can have a better understanding of what is happening to the space craft and/or equipment (e.g., while an antenna or solar panel is being deployed) at any given time. A VR headset allows the person to have a real-time VR experience in a space environment such that (s)he can walk around, inspect and zoom in on the space craft and/or equipment from every possible angle. In order for the real-time VR experience to be possible, VR sensors need to be coupled to the real-world space craft and/or equipment, and a digital model of the real-world space craft and/or equipment needs to be created in a computing device (e.g., a personal computer) being used to drive the VR laboratory.

In the VR scenarios, perfect or near-perfect telemetry of the real-world space craft and/or equipment can be achieved. If VR sensors are placed on all moving parts of the real-world space craft and/or equipment, then an accurate digital model of the real-world space craft and/or equipment deployed in space can be created on the ground.

Accordingly, the present disclosure concerns systems and methods for providing a VR environment in which a user can interact with a VR model of a space structure. The space structure is outfitted with sensors and cameras that can be used to create the VR 3D model thereof in real-time. The VR 3D model permits the user to virtually see, enter and interact with the space structure having a geometry matching the current geometry of the actual physical space structure, while receiving real-time feedback from the structure.

By replicating the space structure in a virtual environment and allowing the user to enter the virtual environment, the present solution affords the user the opportunity to: monitor and observe real time deployment of the structure and allow for dynamic inspection of deployed geometry; and visually and physically interact with as-built geometry in a manner which provides real-time first-person feedback to the user.

The methods generally involve: obtaining, by a computing device located on Earth, a first digital 3D model of the real-world space structure having moving parts with a plurality of VR positional tracking system markers coupled thereto; receiving, by the computing device, a first video generated by at least one camera of the real-world space structure deployed in space (where at least some of the plurality of VR positional tracking system markers were in the camera's view at the time of the first video's creation); using contents of the first video, by the computing device, to convert the first digital 3D model into a second digital 3D model representative of current positions and orientations of the real-world space structure's moving parts; and providing an operator with a real-time VR experience with the real-world space structure by displaying the second digital 3D model in a VR space environment.

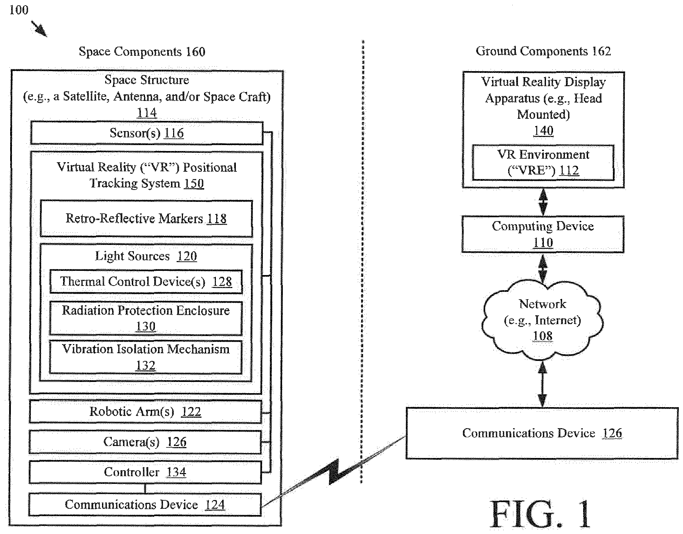

Referring now to FIG. 1, there is provided an illustration of an illustrative system **100** that is configured to facilitate an inspection and interaction with a real-world space structure **114** in real-time using VR technology. In this regard, system **100** comprises space components **160** and ground components **162.** The space components **160** include at least one space structure **114.** The space structure **114** includes, but is not limited to, a satellite, an antenna, and/or a space craft. The space structure **114** is shown in FIG. 1 as being deployed in space. Techniques for deploying space structures in space are well known in the art, and therefore will not be described herein. Any known or to be known technique for deploying space structures in space can be employed herein without limitation.

Notably, the space structure **114** comprises at least one sensor **116,** a VR positional tracking system **150,** at least one robotic arm **122,** at least one camera **126,** a controller **134** and a communications device **124.** Each of the listed devices is well known in the art, and therefore will not be described in detail herein. In some scenarios, the sensor **116** includes, but is not limited to, a gyroscope, an accelerometer, a switch, a potentiometer, and/or a temperature sensor.

The robotic arm **122** includes, but is not limited to, an articulating and/or telescoping robotic arm with a gripper at a free end thereof. In some scenarios, two or more robotic arms are provided. For example, a first robotic arm is provided to grasp and hold objects, while a second robotic arm is provided to manipulate the objects. In this way, objects can be assembled post deployment in space. The present solution is not limited to the particulars of this example. Any number of robotic arms can be employed herein in accordance with a particular example.

The controller **134** comprises a programmed computing device with a processor and memory. The communications device **124** is generally configured to communicate downlink information from the spaceborne structure **114** to a ground based communication device **126,** and receive uplink communications from the ground based communication device **126.**

The VR positional tracking system **150** comprises optical tracking components, such as active markers and passive markers. The active markers include, but are not limited to, laser or IR light sources **120** which periodically flash. The passive markers include, but are not limited to, retro-reflective markers **118** which reflect the laser or IR light back towards a light source **120** and/or a camera **126** with built-in IR lighting. Moving parts of the space structure **114** are fitted with the optical tracking components **118, 120.** The optical tracking components **118, 120** are affixed to surfaces of the moving parts via a space qualifying adhesive.

The inclusion of such VR tracking components on the space structure is not an obvious modification thereto. In this regard, it should be understood that space shuttles have very limited storage space for carrying space structures from Earth into space. Also, space shuttles have strict weight requirements. One can appreciate that the VR tracking components take up limited space of the space shuttle, and also increase the weight of the space structure. However, the present solution allows for the assembly of space structures after being deployed in space rather than when present on Earth. As such, the space structures can have new and novel designs which allow for a decreased amount of storage space required on a shuttle therefore and/or allows for a decrease in the space structure's overall weight despite the provision of the VR tracking components therewith. This is at least partially facilitated by the fact the space structure assembly can now be performed in the zero gravity environment of space rather than the gravity environment of Earth.

The light sources **120** are designed to withstand temperatures and radiation levels in a space environment, as well as any vibration caused during deployment in the space environment. In this regard, the light sources **120** comprise a radiation protective enclosure **130** formed of a dense material and a vibration isolation mechanism **132** (e.g., a spring or other resilient member). Thermal control device(s) **128** is(are) also provided for controlling the temperature of the light source(s) **120.** The thermal control device can include, but is not limited to, a radiator, a heater and/or a blanket. The thermal control device **128** is configured to operate autonomously while in space and/or be remotely controlled by an operator located on Earth.

In some scenarios, the camera(s) **126** capture video of the optical tracking markers **118** that can be used to extract the positions of the space structure's moving parts therefrom. The sensor data collected by the sensor **116** and video(s) generated by the camera(s) **126** are communicated from the space structure **114** to a ground based computing device **110** via the communication device **126** and a network (e.g., the Internet or Intranet) **108.**

The computing device **110** uses at least one algorithm (e.g., a 3D pose estimation algorithm) to extract the positions of the space structure's moving parts from the optical tracking components **118, 120.** The algorithm generally compares the known marker locations on the real-world space structure with the marker locations shown in the video(s), and makes a determination with regard to the current position and orientation of the space structure's moving parts. The results of this determination are then used to facilitate an inspection of and/or interaction with the real-world space structure in real-time using VR technology.

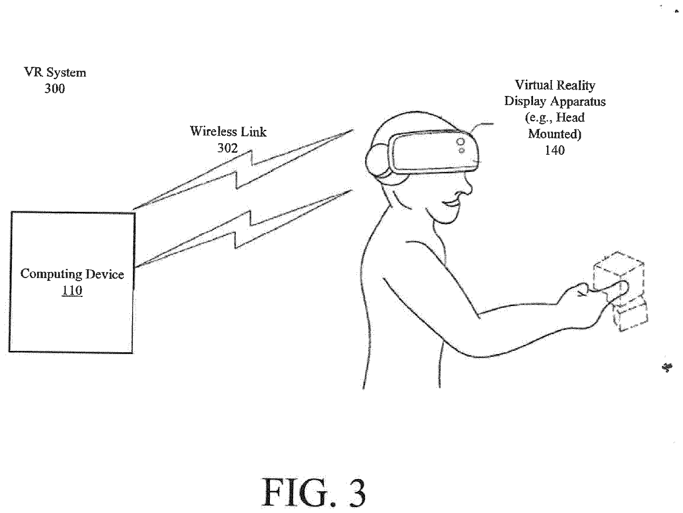

In this regard, the computing device **110** is configured to create and store a digital 3D model of the real-world space structure **114.** The digital 3D model is updated based on the previously determined current position and orientation of the space structure's moving parts. The digital 3D model is displayed in a VR environment **112** via a VR display apparatus **140** to which the computing device **110** is communicatively connected via a wired link or wireless link (e.g., wireless link **302** of FIG. 3). In this way, an operator is able to inspect and/or interact with the real-world space structure **114** deployed in space via the VR technology. For example, the operator is able to use the VR technology to assembly parts of the spaceborne space structure while being located on Earth, as well as cause movements (e.g., vibration) of the space structure and/or its's movable parts via the remotely controlled robotic arm(s) **122.** The robotic arm(s) **122** can be configured to mimic movements of the operators hands and/or arms.

VR display apparatus are well known in the art, and therefore will not be described in detail herein. Any known or to be known VR display apparatus can be used herein without limitation. For example, the present solution employs a head-mounted VR display apparatus having part number GOA20002WW and available from Lenovo of Beijing China. Alternatively, the present solution employs the Oculus Rift available from Oculus VR, a division of Facebook Inc. of California, United States of America is employed herein. The present solution is not limited to the particulars of this example.

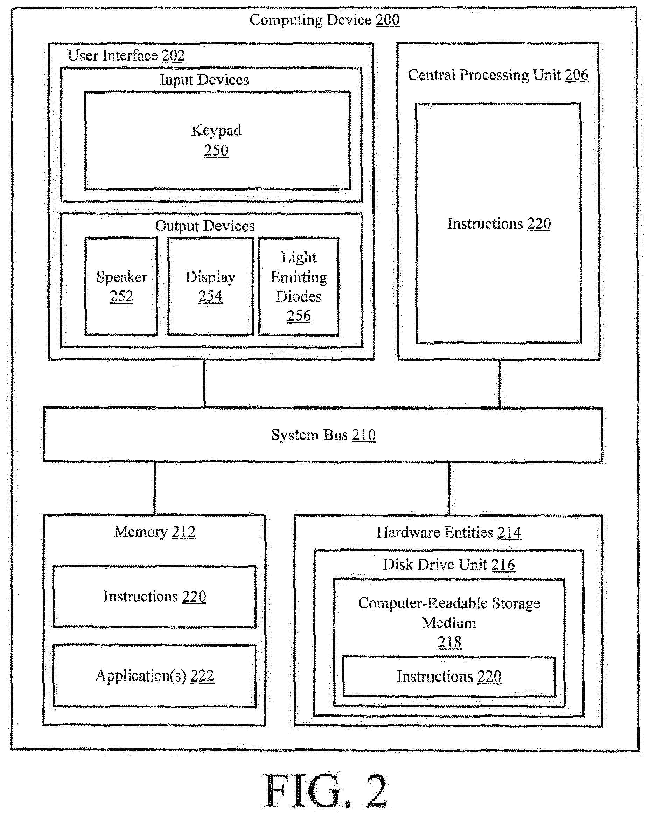

Referring now to FIG. 2, there is provided a detailed block diagram of an exemplary architecture for a computing device **200.** Computing device **110** and/or controller **134** of FIG. 1 is(are) the same as or substantially similar to computing device **200.** As such, the following discussion of computing device **200** is sufficient for understanding computing device **110** and/or controller **134.**

Notably, the computing device **200** may include more or less components than those shown in FIG. 2. However, the components shown are sufficient to disclose an illustrative embodiment implementing the present solution. The hardware architecture of FIG. 2 represents one embodiment of a representative computing device configured to facilitate the remote inspection of and/or interaction with a real-world space structure in real-time. As such, the computing device **200** of FIG. 2 implements at least a portion of a method for inspecting and interacting with a real-world space structure in real-time using VR technology in accordance with the present solution.

Some or all the components of the computing device **200** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 2, the computing device **200** comprises a user interface **202,** a CPU **206,** a system bus **210,** a memory **212** connected to and accessible by other portions of computing device **200** through system bus **210,** and hardware entities **214** connected to system bus **210.** The user interface can include input devices (e.g., a keypad **250**) and output devices (e.g., speaker **252,** a display **254** (e.g., a touch screen display and/or the VR display apparatus **140** of FIG. 1) and/or light emitting diodes **256**), which facilitate user-software interactions for controlling operations of the computing device **200.**

At least some of the hardware entities **214** perform actions involving access to and use of memory **212,** which can be a RAM, a disk driver and/or a Compact Disc Read Only Memory ("CD-ROM"). Hardware entities **214** can include a disk drive unit **216** comprising a computer-readable storage medium **218** on which is stored one or more sets of instructions **220** (e.g., software code) configured to implement one or more of the methodologies, procedures, or functions described herein. The instructions **220** can also reside, completely or at least partially, within the memory **212** and/or within the CPU **206** during execution thereof by the computing device **200.** The memory **212** and the CPU **206** also can constitute machine-readable media. The term "machine-readable media", as used here, refers to a single medium or multiple media (e.g., a centralized or distributed database, and/or associated caches and servers) that store the one or more sets of instructions **220.** The term "machine-readable media", as used here, also refers to any medium that is capable of storing, encoding or carrying a set of instructions **220** for execution by the computing device **200** and that cause the computing device **200** to perform any one or more of the methodologies of the present disclosure.

In some scenarios, the hardware entities **214** include an electronic circuit (e.g., a processor) programmed for facilitating the provision of a VR environment in which a visual experience with the real-world spaceborne structure can be simulated in real-time or near real-time. In this regard, it should be understood that the electronic circuit can access and run a software application **222** installed on the computing device **200.** The software application **222** is generally operative to facilitate: the creation of a digital 3D model of a real-world space structure; the storage of the digital 3D model for subsequent use in providing a VR experience; the creation of a VR environment in which a visual experience with the real-world space structure can be simulated; the reception of sensor data and/or videos from the real-world space structure; the conversation of the digital 3D model to another digital 3D model representative of the current positions of the real-world space structure's moving part positions and/or orientations based on the sensor data and/or videos; the display of the digital 3D models in the VR environment; and/or user inspection of and/or interactions with the digital 3D models in the VR environment. Other functions of the software application **222** will become apparent as the discussion progresses. Such other functions can relate to remote control of a space structure's moving parts and/or operational parameters.

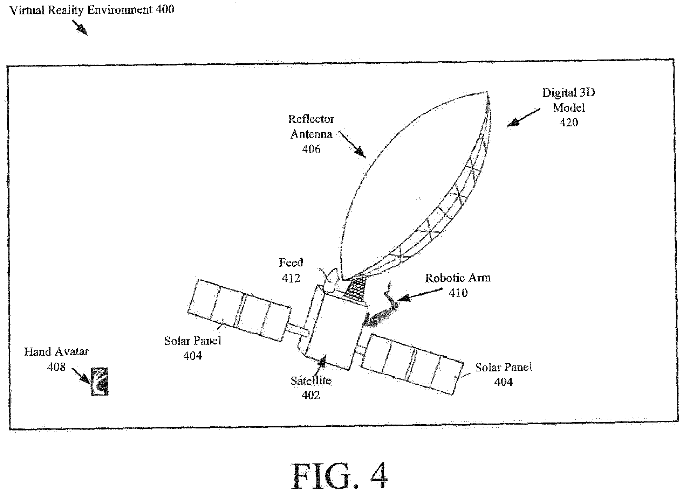

Referring now to FIG. 4, there is provided an illustration of an illustrative VR environment **400** in which a visual experience with a real-world space structure (e.g., space structure **114** of FIG. 1) can be simulated. A digital 3D model **420** of the real-world space structure is displayed in the VR environment **400.** The digital 3D model **420** comprises a satellite **402,** solar panels **404,** a robotic arm **410,** an antenna feed **412,** and a reflector antenna **406.** The solar panels **404,** robotic arm **410** and reflector antenna **406** are movable parts of the space structure. A hand avatar **408** may also be provided.

The VR environment **400** provides an operator with the ability to control (i.e., move in real-time or near real time), program (e.g., assign movement patterns for later execution), or collaborate (e.g., interact with autonomous robot behavior) with the robotic arm using the 3D avatar **410** thereof. These features of the VR technology can be used, for example, to facilitate an assembly of a space structure's parts once deployed in space, deployment of the space structure's deployable components (e.g., a reflector antenna and/or solar panels) once deployed in space, movement of the space structure while deployed in space (e.g., shacking the structure to untangle objects), a remote control of motors, an activation/deactivation of electronic and computing systems once deployed in space (e.g., via the actuation of a mechanical switch), and/or an establishment of electrical connections between the space structure's electronic circuits once deployed in space (e.g., plug-in a female connector into a male connector).

First person perspectives and/or third person perspectives can be employed in the VR environment **400** to facilitate the control, programming and/or collaboration with the robotic arm **410.** For example, in the first person perspective, the robotic arm's gripper is moved around with the appearance to the operator that the gripper is his(her) hand. In the third person perspective, the hand avatar **408** is co-located with the gripper's graphical representation in a manner to suggest the two are as one.

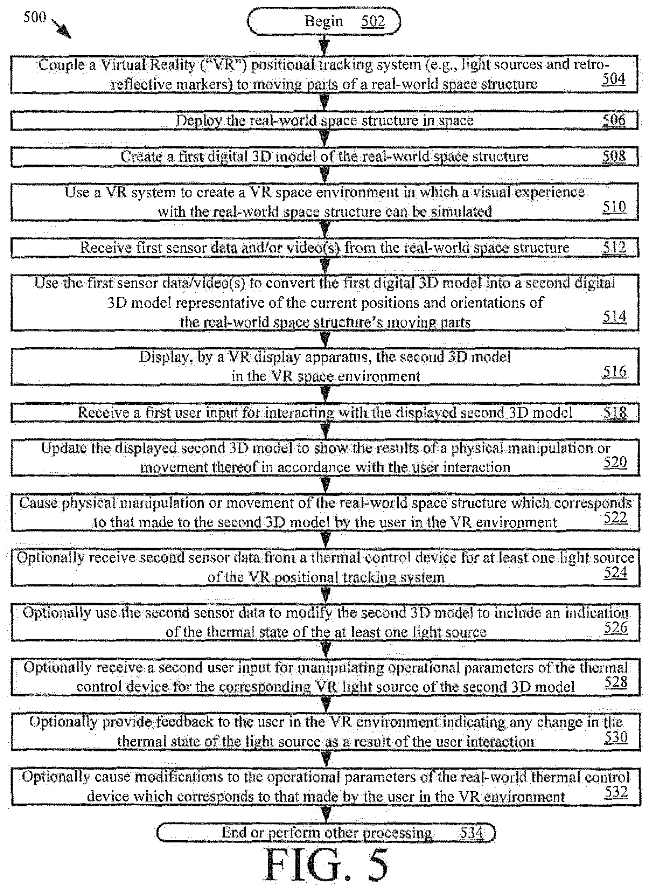

Referring now to FIG. 5, there is provided a flow diagram of an illustrative method 500 for inspecting and interacting with a real-world space structure in real-time using VR technology. Method **500** begins with **502** and continues with **504** where a VR positional tracking system (e.g., VR positional tracking system **150** of FIG. 1) is coupled to moving parts of a real-world space structure (e.g., space structure **114** of FIG. 1). The VR positional tracking system comprises light sources (e.g., light sources **120** of FIG. 1) and retro-reflective markers (e.g., retro-reflective markers **118** of FIG. 1). The number, locations and arrangement of the light sources and retro-reflective markers is selected to ensure that the positions and orientations of the movable parts can be determined even when there is some missing data (such as when a marker is outside the camera's view or is temporarily obstructed). The real-world space structure is then deployed in space, as shown by **506.**

In next **508,** a first digital 3D model of the real-world space structure is created using a computing device (e.g., computing device **110** of FIG. 1). A Computer Aided Design ("CAD") software program can be used by the computing device to create the digital 3D model. CAD software programs are well known in the art, and therefore will not be described herein. Any known or to be known CAD software program can be used herein without limitation.

A VR system (e.g., VR system **300** of FIG. 3) is used in **510** to create a VR space environment (e.g., VR environment **400** of FIG. 4) in which a visual experience with the real-world space structure can be simulated. First sensor data and/or video(s) from the real-world space structure is received at the computing device. Various intermediary devices (e.g., communication devices **124, 126** of FIG. 1) and networks (e.g., network **108** of FIG. 1) maybe employed here to facilitate the communication of the information from the real-world space structure to the computing device (e.g., computing device **110** of FIG. 1). Communication methods for communicating information between spaceborne systems and ground stations are well known in the art. Any known or to be known communications method suitable for this purpose can be used herein without limitation.

In **514,** the first sensor data and/or video(s) is/are used to convert the first digital 3D model into a second digital 3D model representative of the current positions and/or orientations of the real-world space structure's moving parts. This conversion is achieved using at least one algorithm (e.g., a 3D pose estimation algorithm) to extract the positions and/or orientations of the space structure's moving parts from the first sensor data and/or video content. The algorithm generally compares the known active/passive VR positional tracking marker locations on the real-world space structure with the marker locations shown in the video(s), and makes a determination with regard to the current position and orientation of the space structure's moving parts. The determined current position and orientation can be adjusted in view of the sensor data (e.g., gyroscope data, accelerometer data, etc.). The adjustment can be made to improve the accuracy of the determined position and orientation of the space structure's moving parts.

The second 3D model is then displayed in **516** by a VR display apparatus (e.g., VR display apparatus **140** of FIG. 1) in the VR space environment. The VR display apparatus can include, but is not limited to, a head-mounted VR display apparatus (such as the Oculus Rift available from Oculus VR, a division of Facebook Inc. of California, United States of America).

In **518,** the VR system receives a first user input for interacting with the displayed second 3D model. Input means for VR systems are well known in the art, and therefore will not be described herein. Any known or to be known VR system input means can be used herein without limitation. For example, grippers, paddles, triggers, and/or gestures can be used here. The present solution is not limited in this regard. The displayed second 3D model is updated in **520** to show the results of a physical manipulation or movement thereof in accordance with the first user interaction. For example, a solar panel or an antenna is assembled or opened to its fully deployed state. The present solution is not limited to the particulars of this example.

Thereafter, **522** is performed where the VR system causes a physical manipulation or movement of the real-world space structure which corresponds to that made to the second 3D model by the user in the VR environment. In this regard, the computing device (e.g., computing device **110** of FIG. 1) generates a command signal for commanding and/or programming a robotic arm or other mechanism to physically manipulate or move the real-world space structure in the given manner. The command signal is sent from the computing device to the real-world space structure via the intermediary communication device(s) (e.g., communication devices **124, 126** of FIG. 1) and network(s) (e.g., network **108** of FIG. 1). Techniques for remotely commanding and/or programming robotic devices are well known in the art, and therefore will not be described herein. Any known or to be known technique for remotely commanding and/or programming robotic devices can be used herein without limitation. **522** can also involve providing visual feedback of the real-world space structure's movement to the operator via the VR technology.

In optional **524,** second sensor data is received by the computing device (e.g., computing device **110** of FIG. 1) from a thermal control device of at least one light source (e.g., light source **120** of FIG. 1) coupled to the real-world space structure. The received information is used in optional **526** to modify the second 3D model to include an indication of the thermal state of the at least one light source. The indication is made via an indicator. The indicator includes, but is not limited to, text, an icon, and/or a color change of the corresponding 3D model portion.

Next in optional **528,** a second user input is received for manipulating operational parameters of the thermal control device for the corresponding VR light source of the second 3D model. Feedback is provided to the user in the VR space environment, as shown by optional **530.** The feedback indicates any change in the thermal state of the light source as a result of the user's interaction with the second 3D model. In optional **532,** the computing device (e.g., computing device **110** of FIG. 1) generates a command signal for modifying the operational parameters of the real-world thermal control device. The command signal is sent from the computing device to the real-world space structure via the intermediary communication device(s) (e.g., communication devices **124, 126** of FIG. 1) and network(s) (e.g., network **108** of FIG. 1). Subsequently, **534** is performed where method **500** ends or other processing is performed.

All of the apparatus, methods, and algorithms disclosed and claimed herein can be made and executed without undue experimentation in light of the present disclosure. While the invention has been described in terms of preferred embodiments, it will be apparent to those having ordinary skill in the art that variations may be applied to the apparatus, methods and sequence of steps of the method without departing from the concept, spirit and scope of the invention. More specifically, it will be apparent that certain components may be added to, combined with, or substituted for the components described herein while the same or similar results would be achieved. All such similar substitutes and modifications apparent to those having ordinary skill in the art are deemed to be within the spirit, scope and concept of the invention as defined.

The features and functions disclosed above, as well as alternatives, may be combined into many other different systems or applications. Various presently unforeseen or unanticipated alternatives, modifications, variations or improvements may be made by those skilled in the art, each of which is also intended to be encompassed by the disclosed embodiments.

## Claims

1. A method for inspecting and interacting with a real-world space structure deployed in space using Virtual Reality ("VR") technology, comprising:
obtaining, by a computing device located on Earth, a first digital 3D model of the real-world space structure having moving parts with a plurality of VR positional tracking markers coupled thereto;
receiving, by the computing device, a video generated by at least one camera of the real-world space structure deployed in space, where at least some of the plurality of VR positional tracking markers were in the camera's view at the time of the video's creation;
using the video's content, by the computing device, to convert the first digital 3D model into a second digital 3D model representative of current positions and orientations of the real-world space structure's moving parts; and
providing an operator with a real-time VR experience with the real-world space structure by displaying the second digital 3D model in a VR space environment.

2. The method according to claim 1, further comprising causing movement of at least a portion of the real-world space structure deployed in space by the operator via user-software interactions for interacting with the second digital 3D model while the operator is having the real-time VR experience on Earth.

3. The method according to claim 2, further comprising providing visual feedback of the real-world space structure's movement to the operator via the VR technology.

4. The method according to claim 2, wherein the movement results in an assembly of at least a portion of the real-world space structure while being deployed in space.

5. The method according to claim 4, wherein the assembly is achieved through a remote control of at least one robotic arm of the real-world space structure using the VR technology.

6. The method according to claim 1, wherein the first 3D model is converted into the second 3D model by:
comparing known VR positional tracking marker locations on the real-world space structure with VR positional tracking marker locations shown in the video; and
determining at least one of a first current position and a first current orientation of each said moving part of the real-world space structure based on results of the comparing.

7. The method according to claim 6, further comprising transforming at least one of the first current position and the first current orientation to a more accurate value based on sensor data generated by at least one motion or position detection sensor coupled to the real-world space structure deployed in space.

8. The method according to claim 1, wherein the plurality of VR positional tracking system markers comprise at least one of a periodically flashing light source and a retroreflective marker.

9. The method according to claim 8, wherein the periodically flashing light source comprises at least one of a radiation protective enclosure, a mechanical vibration isolation mechanism, and a thermal control device.

10. A system, comprising:
a real-world space structure having moving parts with a plurality of Virtual Reality ("VR") positional tracking markers coupled thereto; and
a VR system located on Earth and communicatively coupled to the real-world space structure deployed in space, comprising:
a processor; and
a non-transitory computer-readable storage medium comprising programming instructions that are configured to cause the processor to implement a method for inspecting and interacting with the real-world space structure while deployed in space using VR technology, wherein the programming instructions comprise instructions to:
obtain a first digital 3D model of the real-world space structure;
receive a video generated by at least one camera of the real-world space structure while deployed in space, where at least some of the plurality of VR positional tracking markers were in the camera's view at the time of the video's creation;
use the video's content to convert the first digital 3D model into a second digital 3D model representative of current positions and orientations of the real-world space structure's moving parts; and
provide an operator with a real-time VR experience with the real-world space structure by displaying the second digital 3D model in a VR space environment.
